# EUROPÄISCHE PATENTSCHRIFT

(11) **EP 0 492 297 B1**
(45) Veröffentlichungstag und Bekanntmachung des Hinweises auf die Patenterteilung: **05.10.1994**
(21) Anmeldenummer: 91121299.1
(22) Anmeldetag: 12.12.1991
(51) Int. Cl.: B29C 47/28, B29C 47/02, B29C 47/06, B29C 47/50

(54) **Spritzkopf zum Ummanteln von langgestreckten Gegenständen**
Extrusion head for sheathing elongated articles
Tête d'extrusion pour le revêtement d'articles allongées

(30) Priorität: 20.12.1990 DE 4040882
(43) Veröffentlichungstag der Anmeldung: 01.07.1992
(73) Patentinhaber: PAUL TROESTER MASCHINENFABRIK, D-30519 Hannover (DE)
(72) Erfinder: Baumgarten, Wilfried, Dipl. Ing., W-3017 Pattensen (DE)
(74) Vertreter: Junius, Walther, Dr.

(56) Entgegenhaltungen:
- DE-A- 1 142 840
- DE-A- 3 824 757
- GB-A- 1 161 507
- US-A- 3 649 143
- US-A- 4 185 954
- US-A- 5 069 612

## Beschreibung

Die Erfindung betrifft einen Spritzkopf zum Ummanteln von langgestreckten Gegenständen, wie Rohren, Kabeln, Walzenkernen, armierten Schläuchen und dergleichen mit einer extrudierten Masse, bestehend aus einem Gehäuse mit einem seitlichen Anschluß für den Extruder, einem fest mit dem Gehäuse verbundenen hohlen Führungskern und einem den Führungskern umgebenden angetriebenen förderschneckenartigen Rotor.

Ein derartiger Spritzkopf ist aus der GB-PS ll 59 453 bekannt geworden.

Für die Fertigung von ummantelten langgestreckten Gegenständen, wie isolierten Rohren, ummantellen Kabeln, Gummiwalzen, ummantelten armierten Schläuchen und dergleichen muß für die Ummantelung eine plastische Masse, meist ein Kunststoff oder eine Kautschukmischung auf das Produktinnenteil, die Schlauchseele, den Profilkern, die Kabelseele, den Walzenkern oder ein Rohr aufgebracht werden. Dieses ist möglich mit Spritzköpfen, durch die der zu ummantelnde Produktinnenteil hindurchgeführt wird und von dem Kunststoff oder der Kautschukmischung umflossen wird, die mittels eines Extruders seitlich in den Spritzkopf eingepreßt ist.

Bei dem Vorgang dieses Ummantelns treten zwei grundsätzliche Schwierigkeiten auf, nämlich die der gleichmäßigen Umströmung des Innenteiles zwecks Erzielung einer gleichmäßigen Wanddicke der Ummantelung auf dem Umfang und die des homogenen Zusammenfließens der beiden um den Kern herumfließenden Masseströme. Das erste Problem ist naturgemäß umso größer, je schwieriger die Masse verarbeitbar ist und je größer der Ummantelungsdurchmesser, also auch der Spritzkopf, ist. Besonders bei der Ummantelung von großen Kabeln und bei der Beschichtung von Walzenkernen mit Kautschukmischungen läßt sich dieses Problem nicht in einfacher Weise lösen. Das zweite Problem ist noch gravierender, da oftmals auch bei korrekten Produktabmessungen an der Zusammenfließstelle eine meist kaum erkennbare Inhomogenität der Ummantelung vorliegt, die eine erheblich schlechtere Qualität des Endproduktes an dieser Stelle hervorruft, wie z.B. geringere Festigkeit, Gefahr des Aufplatzens, bei Gummiwalzen maßliche, optische oder Oberflächenfehler und dergleichen. Der Grund hierfür liegt in der deutlich schlechteren (molekularen) Bindung der zusammengeflossenen Massepartikel des Extrudates.

Verbesserungen der Spritzkopftemperierung können hier ebenso wenig helfen wie das Einbringen von masseverdrängenden Vorsprüngen (DE-AS l2 45 l00) oder die Anwendung rotierender Ringe, die mit ihrer Innenoberfläche an der Außenoberfläche des Extrudates anliegen und die Spuren von den Massestrom unterbrechenden Tragbrücken bei der Herstellung von Schlauchfolien verwischen sollen (Ch-PS 347 345).

Aber nicht nur mit einem rotierenden Außenring wie bei der CH-PS 347 345 hat man versucht, die Ummantelung zu vergleichmäßigen, auch mit einem rotierenden Kern in dem Scherspritzkopf, der in der Zeitschrift "Drahtwelt 10-l979, S. 4l6", beschrieben ist, wurde auf das die Ummantelung bildende Material eingewirkt. Dieser rotierende Kern besitzt hier eine völlig glatte Oberfläche. Die Einwirkung wird intensiver, wenn gemäß der GB-PS 11 59 453 der rotierende Kern mit einem Schneckengang versehen ist. Jedoch ist hier die eingangs genannte geradlinige inhomogene Spur an der Zusammenfließstelle des extrudierten Materials im Spritzkopf durch den Schneckengang wendelförmig geworden, so daß diese inhomogene Spur pro Längeneinheit des Endproduktes länger als die achsparallel verlaufende Spur ist. Dadurch sind die in dieser Spur verborgenen Gefahren für das Produkt noch größer geworden.

Der gleiche mit einem Schneckengang versehene rotierende Kern ist bei der EP 0 231 976 A 2 in Anwendung gebracht, bei diesem erstreckt sich die schneckenförmige Wendel fast bis zur Spitze des rotierenden Dornes, wodurch die im Produkt hinterlassene inhomogene Spur noch ausgeprägter hervortritt. Hier ist am rotierenden Dorn eine axiale Dichtung zwischen dem feststehenden zentralen Lagerrohr und dem auf ihm rotierenden Dorn vorgesehen. Eine solche Axialdichtung ist aufgrund der großen Anpreßkraft kaum betriebssicher und entwickelt unerwünschte Reibungswärme, welche insbesondere bei vernetzbaren Mischungen vermieden werden muß.

Die Erfindung vermeidet die Nachteile des Standes der Technik. Es ist die Aufgabe der Erfindung, einen einfach aufgebauten Spritzkopf zu schaffen, welcher eine völlig homogene Ummantelung mit einfachen Mitteln liefert.

Der erfindungsgemäße Spritzkopf zeichnet sich dadurch aus, daß die Höhe der Schneckenstege vom Masseeinlauf in Förderrichtung abnimmt, und daß die Spaltweite zwischen der Oberkante des Schneckensteges und der Innenwand des Gehäuses in Förderrichtung größer wird.

Dieser Spritzkopf fertigt Ummantelungen, welche weder eine achsparallele noch eine wendelförmige Linie von Inhomogenitäten aufweist. Durch die abnehmende Höhe der Schneckenstege und durch die sich vergrößernde Spaltweite zwischen der Oberkante der Schneckenstege und der Innenwand des Gehäuses entsteht ein Fließverhalten der extrudierten Masse, welche das Gefüge der sich berührenden Kanten des vorher geteilten Stranges völlig verschwinden läßt. Die der Masse aufgezwungene Rotation beim Übergang zum axialen Durchfluß hört hierbei allmählich auf, und zwar an der Außenseite der Ummantelung früher als an der Innenseite, so daß das Extrudat an der Außenseite bereits erheblich früher in eine reine Axialströmung als an der Innenseite übergeht. Durch diese Fließverhältnisse wird eine völlig homogene Ummantelung extrudiert.

Dieser Effekt läßt sich noch dadurch verbessern, daß der Abstand der Gänge des Schneckensteges, der Flankenwinkel, die Stegbreite und/oder die Gangtiefe in Förderrichtung geändert ist. Auch dieses kann wesentlich dazu beitragen, die bei den bekannten Spritzköpfen entstehende wendelförmige Fließmarkierung zu vermeiden.

Dabei ist es zweckmäßig, wenn der Rotor mit Radialdichtungen gegenüber dem Gehäuse und gegenüber dem feststehenden Hohldorn abgedichtet ist. Diese Radialdichtungen vermeiden die bei Axialdichtungen auftretenden Erwärmungen mit ihren ungünstigen Einflüssen auf das Extrudat. Das trägt zur Vermeidung der Inhomogenitäten bei.

Zweckmäßig ist es, wenn die Radialdichtungen durch ein Schmiermittel beaufschlagt sind, welches durch Bohrungen im Gehäuse und im Hohldorn zugeführt wird.

Dabei kann es vorteilhaft sein, wenn ein Schmiermittel verwendet wird, welches sich mit dem Extrudat verbindet und/oder ein Gleit- oder Haftmittel darstellt. Dieses wird dann dem Extrudat, und zwar der Innenwandung der Ummantelung erst kurz vor der Berührung mit dem Kern bzw. der Seele zugeführt.

Für das Aufbringen einer doppel- oder mehrschichtigen Ummantelung ist es zweckmäßig, zwei mit Rotoren ausgestattete Spritzvorrichtungen hintereinander zu schalten, die von unterschiedlichen Extrudern gespeist sind ,und die vorzugsweise in einem gemeinsamen Gehäuse untergebracht sind. In vielen Fällen wird es aber auch ausreichen, vor dem Rotor im Spritzkopf einen einfachen Ummantelungskopf ohne rotierende Teile anzuordnen.

In vielen Fällen wird es aber auch ausreichen, wenn für das mehrschichtige Ummanteln eine Spritzvorrichtung mit und eine ohne Rotor hintereinandergeschaltet und dabei vorzugsweise in einem gemeinsamen Gehäuse integriert werden. Dabei ist es zweckmäßig, wenn die Hohldorne vorzugsweise konzentrisch ineinander angeordnet sind und am freistehenden Ende Teile des Formwerkzeuges tragen. Das Gehäuse ist dabei vorzugsweise aus zwei hintereinander angeordneten Gehäuseteilen aufgebaut, von denen der Gehäuseteil sich in den Hohldorn fortsetzt, der vom Rotor umgeben ist, indem Gehäuseteil und Hohldorn als ein Stück gefertigt sind oder der Hohldorn an das Gehäuseteil an- oder eingebaut ist.

Um eine ständig gleichbleibende Ummantelungsqualität zu erzielen, ist es zweckmäßig, eine Druckmessung im Extrudateingang und/oder am Extrudatausgang und eine Druckdrehzahlregelung des Rotors und/oder der Extruderschnecke vorzusehen.

Das Wesen der Erfindung ist nachstehend anhand von in der Zeichnung schematisch dargestellten Ausführungsbeispielen näher erläutert. Es zeigen:
- Fig. l: einen Schnitt durch den Spritzkopf,

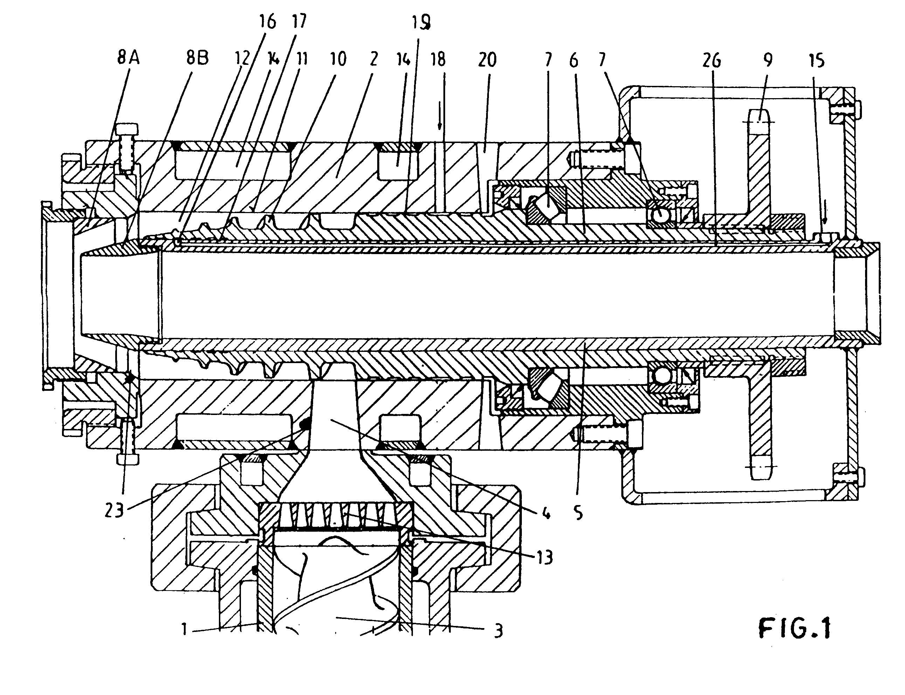

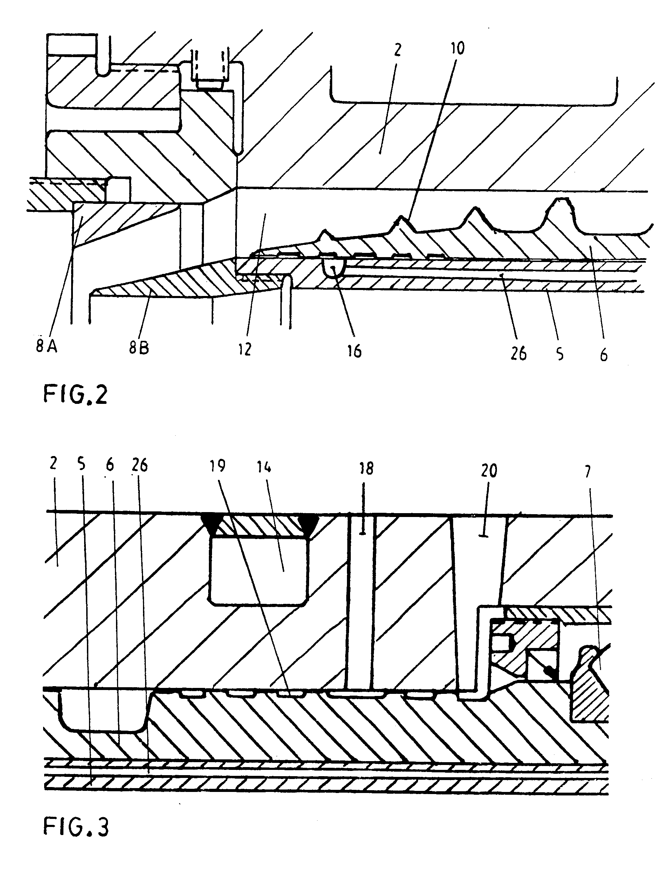

- Fig. 2: ein vergrößertes Detail aus Fig. l, nämlich das vordere Ende des Rotors mit der Schmierung des vorderen Rotorendes,
- Fig. 3: ein Detail aus Fig. l, nämlich die Schmierung des hinteren Rotorendes,
- Fig. 4: einen Spritzkopf für eine doppelwandige Ummantelung, der einen Rotor aufweist,
- Fig. 5: einen Spritzkopf für eine doppelwandige Ummantelung mit zwei Rotoren.

An den Extruder 1 ist mit nicht dargestellten Arbeitsmitteln das Gehäuse 2 des Spritzkopfes angebaut. Die Förderschnecke 3 des Extruders fördert das im Extruder aufgeschlossene Material durch den Kanal 4 in das Innere des Spritzkopfgehäuses 2. In diesem ist ein Rotor 6 mittels der Lager 7 gelagert, welcher einen fest mit dem Gehäuse 2 verbundenen Hohldorn 5 umgibt. Durch diesen Hohldorn 5 wird der mit dem Extrudat zu ummantelnde langgestreckte Gegenstand durchgeführt, wobei dieser Gegenstand von rechts her einläuft und auf der linken Seite im Formwerkzeug 8 von dem aus dem Kanal 4 zugeführten Extrudat ummantelt wird. Dieses Extrudat ist auf seinem Wege vom Kanal 4 zum Formwerkzeug 8 einer Behandlung durch den Rotor 6 unterzogen, der mittels des Zahnrades 9 angetrieben wird, und der auf seiner Außenseite eine ein- oder mehrgängige Schnecke l0 trägt. Diese ist im zylindrischen Innenraum des Spritzkopfgehäuses 2 befindlich. Das Extrudat wird durch den Kanal in den Zwischenraum zwischen dem Rotor 6 und der zylindrischen Innenwand ll durch den im Extruder 1 aufgebauten Druck gefördert. Da sich die Wandstärke des Rotors 6 in Richtung auf das Formwerkzeug 8 verringert und da zusätzlich die Höhe der Schneckenstege l0 abnimmt, wird das Extrudat in einen Raum 12 gefördert, dessen Ringquerschnitt in Förderrichtung sich erweitert, so daß die Spaltweite zwischen der Oberkante des Schneckensteges l0 und der Innenwand ll des Gehäuses 2 in Förderrichtung größer wird.

Durch diese geometrische Gestaltung des Rotors und der an seiner Außenseite befindlichen Schnecke wird im Extrudat zusätzlich zu der Bewegung in Förderrichtung nach links durch den sich in seiner Höhe verringernden Schneckensteg eine zusätzliche Bewegungskomponente erzeugt, welche dazu führt, daß in diesem Raum l2 eine zusätzliche Vermischung erfolgt, die alle Spuren von Inhomogenitäten zerstört, die durch die Förderung des Extrudats in den ersten Schneckengängen aufgetreten sein mögen, als die Oberkante des Schneckensteges noch dicht neben der zylindrischen Innenwand ll befindlich war.

Der Extruder kann mit einem Sieb 13 ausgestattet sein, was zweckmäßig zum Zurückhalten von Fremdkörpern und Inhomogenitäten ist. Das Spritzkopfgehäuse 2 kann mit Temperierkanälen l4 ausgestattet sein, die dem Extrudat noch benötigte Wärme zuführen können, aber auch überschüssige Wärme abführen können.

Ganz wesentlich für den Betrieb dieses Spritzkopfes ist es, daß der Rotor 6 gegenüber dem Hohldorn 5 und gegenüber dem Spritzkopfgehäuse 2 genügend geschmiert ist.

Zur Schmierung des Rotors 6 gegenüber dem Hohldorn 5 wird ein Schmiermittel durch die Schmiermittelzuführung l5 in einen im Hohldorn, 6 befindlichen Schmiermittelkanal 26 eingepreßt und einem Ringkanal l6 zugeführt, welcher unmittelbar vor dem inneren Teil 8B des Formwerkzeuges 8 befindlich ist. In der zylindrischen Innenwand der Rotors 6 sind im Bereich des Ringkanales l6 Umfangsnuten l7 oder die Nuten eines Gewindes eingeformt, welches überschüssiges Schmiermittel durch den Zwischenraum zwischen dem Rotor 6 und dem Hohldorn 5 nach rechts hin abführt.

Für die Schmierung des Rotors 6 gegenüber dem Gehäuse 2 ist ein Zuführungskanal l8 vorgesehen, durch den das Schmiermittel in den Zwischenraum zwischen dem Rotor 6 und der Innenwand ll des Gehäuses 2 eingepreßt wird. In der Außenfläche des Rotors 6 ist ein Sperrgewinde l9 eingeschnitten, welches den Eintritt von Schmiermittel in den mit Extrudat gefüllten Raum l2 verhindert und das Schmiermittel in den Spalt 20 austrägt.

Erfindungsgemäß kann bei beiden Radialdichtungen jeweils eine besondere Schmierung angewendet werden. Die äußere Dichtung kann vorzugsweise mit einer gering dosierten aufschmelzenden Masse, welche mischungsverträglich oder sogar stabilisierend ist, befüllt werden. Dieses kann der gleiche Kunststoff sein, der als Ummantelung verwendet wird, bei Kautschukmischungen kann es z.B. ein niedrig schmelzendes Polyäthylen sein. Bei der innen liegenden Dichtung können erfindungsgemäß neben den angeführten Massen auch bekannte Dauerschmiermittel, wie Graphit oder MoS₂ eingesetzt werden, so daß auf eine laufende Nachspeisung des Schmiermittels verzichtet werden kann. Darüber hinaus kommen aber für eine kontinuierliche Nachspeisung z.B. auch schmierfähige Trennmittel, wie Fett, Öl und Chemikalien oder ähnliches in Frage, wenn die Ummantelung leicht abziehbar sein soll, oder ein schmierfähiges Haftmittel, wenn die Ummantelung besonders fest mit dem Kern verbunden sein soll.In diesem Falle wird dieses Mittel nach links in Extrusionsrichtung gefördert. Diese chemischen Mittel können für eine feste molekulare Bindung der Ummantelungsmischung an den Metallkern auch erforderlich sein. Dieses ist bei der Walzenummantelung von besonderem Vorteil, weil dadurch ein besonderer Arbeitsgang in der Kernvorbereitung eingespart werden kann. Es könnte für die Einspeisung auch ein kleiner zusätzlicher Extruder angewandt werden, so daß diese Haftschicht mit genau definierter Dicke herstellbar ist.

Es besteht aber auch die Möglichkeit, das Schmiermittel beidseitig d.h. sowohl in Extrusionsrichtung als auch gegen die Extrusionsrichtung abzuführen.

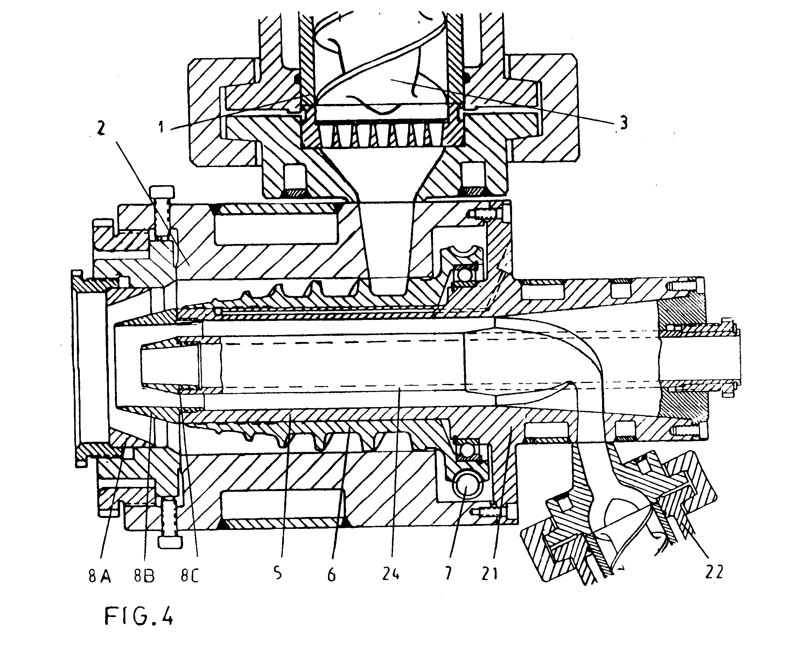

Diese Haftschicht wird allerdings immer nur relativ dünn sein können. Will man eine aus zwei Schichten bestehende Ummantelung aufbringen, so ist es zweckmäßig, zwei hintereinander geschaltete Spritzköpfe nach Fig. 4, wo vor dem Spritzkopf 2, der von dem Extruder l gespeist ist, noch ein weiterer Spritzkopf 2l, der vom Extruder 22 gespeist ist, in Anwendung zu bringen.

Diese beiden Spritzköpfe werden zweckmäßigerweise in einem Spritzkopf integriert. Dabei ist es zweckmäßig, wenn die Hohldorne 24 und 5 vorzugsweise konzentrisch ineinander angeordnet sind und an den freistehenden Enden die Teile 8B, 8C des Formwerkzeuges tragen. Das Gehäuse ist dabei vorzugsweise aus zwei hintereinander angeordneten Gehäuseteilen 2 und 21 aufgebaut, von denen der Gehäuseteil 21 sich in dem Hohldorn 5 fortsetzt, der vom Rotor 6 umgeben ist, indem Gehäuseteil 21 und Hohldorn 5 an das Gehäuseteil 2 an- oder eingebaut ist.

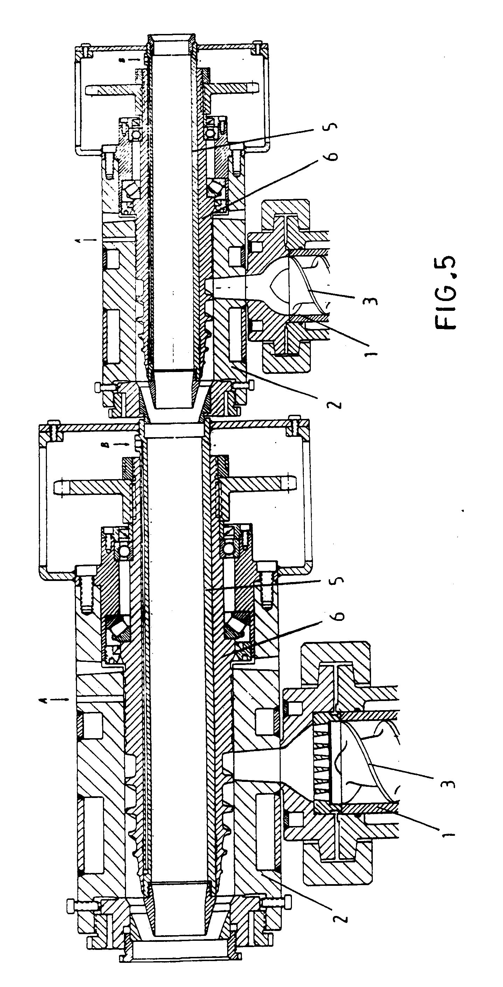

Eine andere Möglichkeit ist in Fig. 5 gezeigt, wo zwei von zwei verschiedenen Extrudern gespeiste Spritzköpfe mit jeweils einem den Hohldorn umgebenden Rotor hintereinander geschaltet sind. Mit diesen Ausführungsformen nach Fig. 4 und 5 lassen sich Doppelummantelungen beliebiger Mantelstärke herstellen. Zweckmäßig ist es, Druckmeßgeber 23 im Kanal 4 und im Formwerkzeug 8 bzw. unmittelbar vor dem Formwerkzeug 8 vorzusehen, die an ein Gerät zur Druckdrehzahlregelung des Rotors 6 und/oder der Extruderschnecke 3 angeschlossen sind.

Besonders zweckmäßig ist es, wenn sich die Schneckenstege nicht über die ganze Länge des Rotors erstrecken, sondern nur über einen antriebsseitigen Teil und mit Abstand vor dessen freiem Ende enden. Das erbringt ein besonders homogenes Produkt. Der Abstand beträgt zweckmäßigerweise ein Drittel der Rotorlänge.

## Patentansprüche

1. Spritzkopf zum Ummanteln von langgestreckten Gegenständen wie Rohren, Kabeln, Walzenkernen, armierten Schläuchen u. dgl. mit einer extrudierten Masse,
bestehend aus einem Gehäuse mit einem seitlichen Anschluß für den Extruder, einem fest mit dem Gehäuse verbundenen hohlen Führungskern und einem den Führungskern umgebenden angetriebenen förderschneckenartigen Rotor,
dadurch gekennzeichnet,
daß die Höhe der Schneckenstege (l0) von Masseeinlauf (4) in Förderrichtung abnimmt,
und daß die Spaltweite zwischen der Oberkante des Schneckensteges (l0) und der Innenwand (ll) des Gehäuses (2) in Förderrichtung größer wird.

2. Spritzkopf nach Anspruch l,
dadurch gekennzeichnet,
daß der Abstand der Gänge des Schneckensteges (l0), der Flankenwinkel, die Stegbreite und/oder die Gangtiefe in Förderrichtung sich ändert.

3. Spritzkopf nach Anspruch l,
dadurch gekennzeichnet,
daß Rotor (6) mit Radialdichtungen (l7,l9) gegenüber dem Gehäuse (2) und gegenüber dem feststehenden Hohldorn (5) abgedichtet ist.

4. Spritzkopf nach Anspruch 3,
dadurch gekennzeichnet,
daß die Radialdichtungen (l7,l9) durch Schmiermittel beaufschlagt sind, welche durch Bohrungen (l5,l8) im Gehäuse (2) und im Hohldorn (5) zugeführt werden.

5. Spritzkopf nach Anspruch 4,
dadurch gekennzeichnet,
daß ein Schmiermittel verwendet wird, welches sich mit dem Extrudat verbindet und/oder ein Gleitmittel oder Haftmittel darstellt.

6. Spritzkopf nach Anspruch l,
gekennzeichnet durch
die Hintereinanderschaltung einer Spritzvorrichtung (2l) mit stillstehendem Hohldorn (24) ohne Rotor und einer mit einem Rotor (6) auf dem Hohldorn (5), die vorzugsweise in einem gemeinsamen Gehäuse untergebracht sind.

7. Spritzkopf nach Anspruch 6,
dadurch gekennzeichnet,
daß die Hohldorne (24 und 5) vorzugsweise konzentrisch ineinander angeordnet sind und am freistehenden Ende Teile (8B, 8C) des Formwerkzeuges tragen.

8. Spritzkopf nach Anspruch l,
gekennzeichnet durch
die Hintereinanderschaltung zweier Rotoren (6), die von unterschiedlichen Extrudern (l,22) gespeist sind, die vorzugsweise in einem gemeinsamen Gehäuse untergebracht sind.

9. Spritzkopf nach Anspruch l,
gekennzeichnet durch
Druckmessung im Extrudateingang und/oder Extrudatausgang und einer Druckdrehzahlregelung des Rotors und/oder der Extruderschnecke.

10. Spritzkopf nach Anspruch l,
dadurch gekennzeichnet,
daß sich die Schneckenstege (l0) nicht über die ganze Länge des Rotors (6) erstrecken, sondern nur über einen antriebsseitigen Teil und mit Abstand vor dessen freiem Ende enden.

## Claims

1. Extrusion head for sheathing elongated objects such as pipes, cables, roll cores, armoured hoses and the like with an extruded material, consisting of a housing with a lateral connection for the extruder, a hollow guide core connected firmly to the housing, and a driven rotor like a screw conveyor surrounding the guide core, characterised in that the height of the screw thread (10) reduces from the material inlet (4) in the direction of conveyance, and in that the width of the gap between the upper edge of the screw thread (10) and the internal wall (11) of the housing (2) becomes greater in the direction of conveyance.

2. Extrusion head according to claim 1, characterised in that the spacing of the turns of the screw thread (10), the flank angle, the thread width and/or the depth of the turns change in the direction of conveyance.

3. Extrusion head according to claim 1, characterised in that the rotor (6) is sealed with radial seals (17, 19) relative to the housing (2) and relative to the fixed hollow mandrel (5).

4. Extrusion head according to claim 3, characterised in that the radial seals (17, 19) are acted upon by lubricants which are supplied through holes (15, 18) in the housing (2) and in the hollow mandrel (5).

5. Extrusion head according to claim 4, characterised in that a lubricant is used which combines with the extruded material and/or constitutes a lubricant or adhesive.

6. Extrusion head according to claim 1, characterised in that an extrusion device (21) with a stationary hollow mandrel (24) without a rotor and one with a rotor (6) on the hollow mandrel (5) are connected one behind the other and preferably accommodated in a common housing.

7. Extrusion head according to claim 6, characterised in that the hollow mandrels (24, 5) are preferably disposed concentrically in one another and at the free end carry parts (8B, 8C) of the moulding tool.

8. Extrusion head according to claim 1, characterised in that two rotors (6) which are supplied by different extruders (1, 22) are connected one behind the other and preferably accommodated in a common housing.

9. Extrusion head according to claim 1, characterised by measurement of the pressure in the extruded material inlet and/or the extruded material outlet and regulation of the pressure speed of the rotor and/or the extruder screw.

10. Extrusion head according to claim 1, characterised in that the screw thread (10) does not extend over the entire length of the rotor (6) but only extends over a drive-end portion and terminates some distance short of its free end.

## Revendications

1. Tête d'extrusion pour envelopper des articles allongés tels que des tubes, des câbles, des noyaux de cylindres, des tuyaux armés et analogues, par une masse extrudée,
constituée par un carter comportant un raccord latéral pour l'extrudeuse, un noyau creux de guidage, relié de façon fixe au carter, et un rotor entraîné en forme de vis convoyeuse, qui entoure le noyau de guidage,
caractérisée en ce
que la hauteur des filets de vis (10) diminue à partir de l'entrée (4) de la masse dans la direction d'entraînement, et
que la largeur de fente entre le bord supérieur des filets de vis (10) et la paroi intérieure (11) du carter (2) augmente dans la direction d'entraînement.

2. Tête d'extrusion selon la revendication 1, caractérisée en ce
que la distance entre les filets de vis (10), l'angle des flancs, la largeur de filet et/ou la profondeur de filet varient dans la direction d'entraînement.

3. Tête d'extrusion selon la revendication 1, caractérisée en ce
que le rotor (6) est fermé de façon étanche au moyen de garnitures d'étanchéité radiales (17,19), par rapport au boîtier (2) et au mandrin creux fixe (5).

4. Tête d'extrusion selon la revendication 3, caractérisée en ce que les garnitures d'étanchéité radiales (17,19) sont chargées par des lubrifiants, qui sont envoyés par des perçages (15,18) ménagés dans le carter (2) et dans le mandrin creux (5).

5. Tête d'extrusion selon la revendication 4, caractérisée en ce qu'on utilise un lubrifiant, qui se combine à un produit extrudé et/ou représente un agent de démoulage ou un agent adhésif.

6. Tête d'extrusion selon la revendication 1, caractérisée par le montage l'un derrière l'autre d'un dispositif d'extrusion (21) comportant un mandrin creux fixe (24) sans rotor et d'un dispositif d'extrusion comportant un mandrin creux fixe (24) comportant un rotor (6) sur le mandrin creux (5), ces unités étant logées de préférence dans un carter commun.

7. Tête d'extrusion selon la revendication 6, caractérisée en ce
les mandrins creux (24 et 5) sont de préférence emboîtés concentriquement l'un dans l'autre et portent, au niveau de leur extrémité libre, des parties (8B,C) de l'outil de moulage.

8. Tête d'extrusion selon la revendication 1, caractérisée par le montage l'un derrière l'autre de deux rotors (6), qui sont alimentés par des extrudeuses différentes (1,22), qui sont logées de préférence dans un carter commun.

9. Tête d'extrusion selon la revendication 1, caractérisée par la mesure de pression à l'entrée du produit extrudé et/ou à la sortie du produit extrudé et une régulation de la vitesse de rotation de compression du rotor et/ou de la vis d'extrudeuse.

10. Tête d'extrusion selon la revendication 1, caractérisée en ce que les filets de vis (10) ne s'étendent pas sur toute la longueur du rotor (6), mais seulement sur une partie, située du côté entraînement, et se terminent à distance de l'extrémité libre de cette partie.
